# EUROPEAN PATENT APPLICATION

(11) **EP 3 605 318 A1**
(43) Date of publication of application: **05.02.2020**
(21) Application number: 18306027.6
(22) Date of filing: 30.07.2018
(51) Int. Cl.: G06F 8/60

(54) **APPLICATION COMPONENT DEPLOYMENT SEQUENCES**

(71) Applicant: Hewlett Packard Enterprise Development LP, Houston, TX 77070 (US)
(72) Inventor: BOUAT, Sébastien, 38053 GRENOBLE (FR)
(74) Representative: Haseltine Lake Kempner LLP

(57) **Abstract**

In some examples, a non-transitory machine-readable medium can include instructions executable by a processing resource to: determine dependencies between a plurality of application components of an application solution to be deployed on a plurality of hardware components of a computing system and generate a deployment sequence for the plurality of application components based on the determined dependencies between the plurality of application components, wherein the deployment sequence includes a portion of the plurality of applications to be deployed on each of the plurality of hardware components and a sequence to deploy the portion of the plurality of application components based on the determined dependencies.

## Description

### Background

A computing system topology can include a plurality of computing devices that can utilize applications to perform functions. The computing devices can be hardware devices that can communicate with other computing devices or perform particular functions. The computing devices can utilize instructions stored on memory resources that can be executed by a processing resource. When installing or deploying a computing system, the plurality of computing devices can be interconnected based on the computing system topology.

### Brief Description of the Drawings

Figure 1 illustrates an example of a computing system layout consistent with the disclosure.
Figure 2 is a block diagram of an example of a memory resource for generating deployment sequences consistent with the disclosure.
Figure 3 is a block diagram of an example of a system for generating deployment sequences consistent with the disclosure.
Figure 4 illustrates an example of a method for generating deployment sequences consistent with the disclosure.
Figure 5 illustrates an example of a system for generating deployment sequences consistent with the disclosure.

### Detailed Description

A network or computing system can include a plurality of computing devices that be utilized to perform particular functions and/or communicate with other devices. For example, a computing system can include servers, access points, databases, virtual machines, and/or other types of computing devices. In some examples, the computing system include hardware computing devices and an application solution to be installed on the hardware computing devices. As used herein, an application solution can, for example, include application components to be installed on each of a plurality of hardware computing devices.

As used herein, an application component can, for example, be instructions that are a portion of the application solution. In some examples, the application components can include instructions that are installed on a hardware component as a unit. For example, a first application component can be installed as a first unit at a first time and a second application component can be installed as a second unit at a second time that is separate from the first application component.

In some examples, the application components can be dependent on the hardware computing devices and/or other application components. For example, a first application component can be installed on a particular hardware computing component before a second application component is installed on the particular hardware computing component. In this example, the second application component may include dependencies with the first application component such that functions of the first application can be utilized by the second application component. In this example, the second application component may not function on the particular hardware computing component when installed before the first application component.

The present disclosure relates to generating deployment sequences for application components of an application solution for a computing system. In some examples, systems and devices described herein can utilize dependencies between a plurality of application components to generate a deployment sequence. In some examples, a start state of the computing system can be compared to an end state of the computing system to determine differences. The differences between the end state and the start state can be utilized to determine the application components to be deployed. As used herein, the term deploy can, for example, include an initial installation of the application component and operations that can be executed when the application component is installed. For example, the term deploy can include installation, reconfigurations, upgrades, scaling, and/or other operations that can be executed by the application components.

In some examples, the determined application components can be utilized to determine the dependencies between the application components and/or between the application components and existing application components deployed on the computing system. For example, the deployment sequence can include an order of deployment for each of the application components on each of a plurality of hardware computing devices or virtual machines of the computing system based on the determined dependencies. In this way, an end state of the computing system can be generated and compared with the start state of the computing system to determine a deployment sequence that considers the determined dependencies and can avoid malfunctions that can be caused by a deployment sequence that does not consider the dependencies between the application components of the application solution.

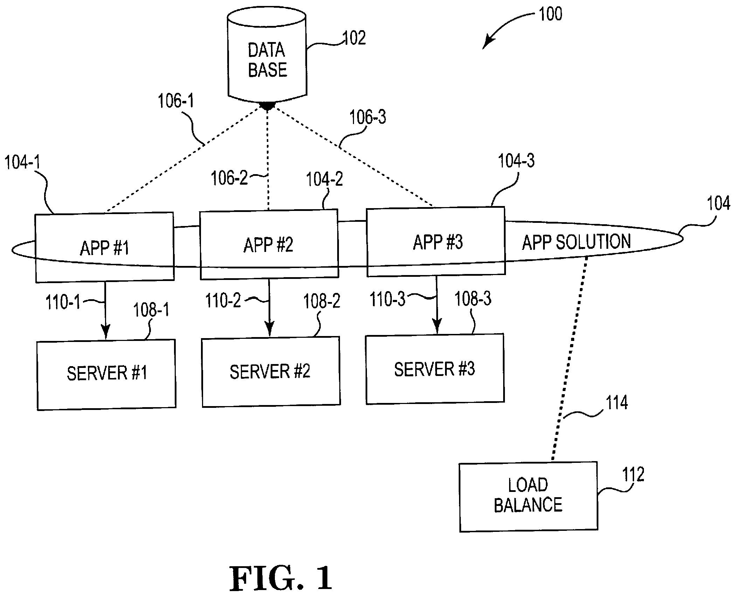

Figure 1 illustrates an example of a computing system layout 100 consistent with the disclosure. In some examples, the computing system layout 100 can illustrate a computing system as described herein. In some examples, the computing system layout 100 can include hardware computing components such as a database 102 and a number of servers 108-1, 108-2, 108-3. In some examples, the computing system layout 100 can include application components 104-1, 104-2, 104-3 to be installed on the number of servers 108-1, 108-2, 108-3.

In some examples, the application solution 104 can be distributed by the database 102 through connections 106-1, 106-2, 106-3. As used herein, the application solution 104 can be instructions that are executable by processing resources to perform functions across the system layout 100. In some examples, the application components 104-1, 104-2, 104-3 can be provided to a corresponding server of the number of servers 108-1, 108-2, 108-3 through hosting relationships 110-1, 110-2, 110-3. In some examples, the connection 106-1, 106-2, 106-3 can be physical and/or wireless connections that can be utilized to transfer information to and from devices. In some examples, the hosting relationships 110-1, 110-2, 110-3 can be applications relationships where the application components 104-1, 104-2, 104-3 are running on the corresponding servers 108-1, 108-2, 108-3.

In some examples, the system layout 100 can include a database 102 that can be connected to an application solution 104 that includes a plurality of application components 104-1, 104-2, 104-3. For examples, the database can be connected to: application component 104-1 via 106-1, application component 104-2 via 106-2, and/or application component 104-3 via 106-3. In some examples, the application solution 104 can be installed via connections 110-1, 110-2, 110-3. For example, application component 104-1 can be installed via connection 110-1, application component 104-2 can be installed via connection 110-2, and/or application component 104-3 can be installed via connection 110-3.

In some examples, the computing system layout 100 can be utilized to determine configuration parameters for the number of servers 108-1, 108-2, 108-3 and/or other hardware devices for the computing system layout 100. In some examples, the configuration parameters can include functional parameters or functional capabilities of the hardware devices of the computing system layout 100. In addition, the configuration parameters can include dependencies and/or connections between the hardware devices. For example, the configuration parameters can include specifications (e.g., manufacturer specifications, manufacturer determination of functional capabilities, etc.) of the hardware and interconnections (e.g., wired connections, wireless connections, etc.) between the hardware components of the computing system layout 100.

In some examples, the configuration parameters can be utilized to determine a hardware location for the application components 104-1, 104-2, 104-3. For example, the application component 104-1 can utilize particular capabilities of the server 108-1. In this example, a determination can be made that the application component 104-1 is to be installed on the server 108-1 such that the application component 104-1 can utilize particular capabilities of the server 108-1.

In some examples, the application components 104-1, 104-2, 104-3 can include application components. As described herein, the application components can include portions of instructions for the application components 104-1, 104-2, 104-3. In some examples, the application components 104-1, 104-2, 104-3 can include dependencies. In some examples, the dependencies can include functions of the application components 104-1, 104-2, 104-3 or application components that are utilized by other application components 104-1, 104-2, 104-3. For example, a first application component 104-1 can utilize functions provided by a second application component 104-2. In this example, the first application component 104-1 can depend from the second application component 104-2. In this example, the second application component 104-2 can be installed before the first application component 104-1 such that the first application component 104-1 can utilize the functions of the second application component 104-2.

In some examples, the application solution 104 can be coupled to a load balancer 112 via connection 114. As used herein, a load balancer 112 can include a device to distribute the application traffic across the number of application components 104-1, 104-2, 104-3 or servers 108-1, 108-2, 108-3. In some examples, the load balancer 112 can be utilized to increase a capacity or reliability of the application components 104-1, 104-2, 104-3 and/or servers 108-1, 108-2, 108-3. For example, the load balancer 112 can be utilized to alter a traffic load between the application components 104-1, 104-2, 104-3. As used herein, the traffic load can be a quantity of end users utilizing a particular application of the application components 104-1, 104-2, 104-3. In some examples, the load balancer 112 can be utilized to dispatch traffic to servers 108-1, 108-2, 108-3 and/or the dispatched traffic can be processed by the application components 104-1, 104-2, 104-3 executing on the corresponding server of the number of servers 108-1, 108-2, 108-3. In some examples, altering the traffic load between the application components 104-1, 104-2, 104-3 can ensure that a single application of the application components 104-1, 104-2, 104-3 is not over utilized or overloaded by users utilizing the single application.

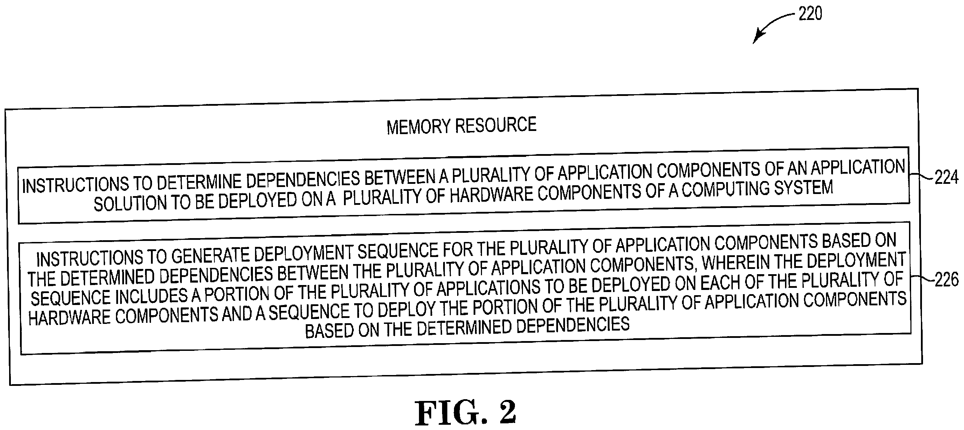

Figure 2 is a block diagram of an example of a memory resource 220 for generating deployment sequences consistent with the disclosure. In some examples, the memory resource 220 can be utilized to store instructions 224, 226 that can be executed by a processing resource to perform functions described herein. In some examples, the processing resource can be coupled to the memory resource 220 via a connection. A processing resource may be a central processing unit (CPU), microprocessor, and/or other hardware device suitable for retrieval and execution of instructions stored in memory resource 220.

Memory resource 220 may be any electronic, magnetic, optical, or other physical storage device that stores executable instructions 224, 226. Thus, memory resource 220 may be, for example, Random Access Memory (RAM), an Electrically-Erasable Programmable Read-Only Memory (EEPROM), a storage drive, an optical disc, and the like. The executable instructions 224, 226 may be stored on the memory resource 220. Memory resource 220 may be a portable, external or remote storage medium, for example, that allows the instructions 224, 226 to be downloaded from the portable/external/remote storage medium. In this situation, the executable instructions 224, 226 may be part of an "installation package". As described herein, memory resource 220 may be encoded with executable instructions 224, 226 for generating deployment sequences as described herein.

In some examples, the memory resource 220 can include instructions 224 that are executable by a processing resource to determine dependencies between a plurality of application components of an application solution to be deployed on a plurality of hardware components of a computing system. As used herein, the dependencies between the plurality of application components can include relationships between the plurality of application components including relationships between the component specifications of the application components, relationships defined by the topology description between the application components, and/or relationships defined by configuration parameters between the application components.

In some examples, a component specification can describe properties of the application components and how the properties of the application components are affected by other application components. For example, the component specification for a particular application component can describe features of other application components that are utilized by the particular application component. In this example, the component specification can include features of hardware components that are utilized by the particular application.

As used herein, a hardware component can include physical hardware such as a computing device and/or virtual hardware such as a virtual machine. As used herein, the features of the hardware component can include resource descriptions, resource capacities, and/or resource configurations. For example, the features of the hardware component can include a description of the processing resources, capabilities and/or capacities of the memory resources, among other features of functions provided by the hardware component. In some examples, the component specification can be generated by an owner or manufacturer of the application component.

In some examples, the system topology description can define which application component is to be deployed on which hardware component. For example, the system topology description can define that a first application component is to be deployed on a first virtual machine and a second application component is to be deployed on a second virtual machine. In another example, the system topology description can define that a plurality of application components that are to be deployed on a plurality of corresponding hardware component.

In some examples, the system topology description can define a coupling between a plurality of instances of the same application component. For example, a first instance of a particular application component can be deployed on a first virtual machine and a second instance of the particular application component can be deployed on a second virtual machine. In this example, the first virtual machine and the second virtual machine can be identified by the system topology description as a high-availability cluster (HA cluster) for the particular application component. As used herein, a HA cluster can include a group of hardware components that support a particular application component with a relatively small quantity of down-time. That is, the system topology description can define clusters and HA clusters for the computing system.

In some examples, the configuration parameters can define settings for each of the plurality of application components. For example, each of the plurality of application components can utilize settings when deployed on the hardware components. For example, the settings of the deployed application components can include settings for interacting with other application components and/or settings for interacting with the hardware application. In one example, the settings of the application components can be altered to provide a HA cluster as described herein.

In some examples, the determined dependencies indicate application components of the plurality of application components that are utilized by other application components of the plurality of application components. As described herein, the component specification can describe properties of the application components and how the properties of the application components are affected by other application components. That is, the determined dependencies can indicate that a first application component is utilized by a second application component. In some examples, the first application component can be deployed before the second application component such that the second application component is capable of utilizing the first application component when the second application component is deployed.

In some examples, the determined dependencies identify a first application component of the plurality of application components that does not function without a second application component deployed prior to the first application component. As described herein, the component specification can describe properties of the application components and how the properties of the application components are affected by other application components. In some examples, the first application component may not function without the second application and thus the first application component and the second application component may have to be deployed on the same hardware component. For example, the first application component can utilize the second application component as a resource for performing a particular function. In this example, the first application component may not be able to perform the particular function if the second application component is not deployed with the first application component.

In some examples, the dependencies between the plurality of application components of an application solution are determined utilizing a system topology that includes a hardware architecture for the plurality of hardware components and a portion of application components to be deployed on each of the plurality of hardware components. As described herein, the system topology description can define which application component is to be deployed on which hardware component.

In some examples, the memory resource 220 can include instructions 226 that are executable by a processing resource to generate a deployment sequence for the plurality of application components based on the determined dependencies between the plurality of application components, wherein the deployment sequence includes a portion of the plurality of applications to be deployed on each of the plurality of hardware components and a sequence to deploy the portion of the plurality of application components based on the determined dependencies. In some examples, the deployment sequence for the plurality of application components can be utilized for installing the plurality of application components and monitoring the plurality of application components when installed.

In some examples, deployment sequence can include instructions that are executable by a processing resource for deploying the plurality of application components. For example, the deployment sequence can include instructions for installing, updating, load balancing, and/or monitoring the plurality of application components. In some examples, the deployment sequence can be based on a difference between a start state and an end state of the computing system.

As used herein, a start state of the computing system can be a current state of the computing system. For example, the start state can be a hardware topology or virtual topology of a computing system to be utilized for a complete application solution. In another example, the start state can be a hardware and application topology at a particular point in time. As used herein, an end state of the computing system can be a state of the computing system when an application solution has been deployed. For example, the end state of the computing system can be a state that includes the application solution and/or a state that includes a particular update of the application solution.

In some examples, determining the dependencies can include determining a difference between the start state and the end state of the computing system. In these examples, the difference can be utilized to identify the application components of the application solution to be deployed on the hardware components of the computing system. In these examples, the system topology description can be utilized to generate the start state and the end state of the computing system. For example, the system topology description can provide the start state for the computing system and the system topology description can be altered to generate the end state of the computing system.

In some examples, the difference between the start state and the end state can be utilized to generate a graphical representation of the difference between the start state and the end state. In some examples, the graphical representation can be utilized to generate the deployment sequence by determining deployment operations that can be executed to go from the start state to the end state. In some examples, a visual graphical representation can be utilized to visually represent the start state and the end state. In some examples, a non-visual graphical representation can be utilized to generate the deployment sequence. In some examples, the deployment operations can include calls to particular deployment routines (e.g., install, configure, start, stop, etc.). In some examples, a graph traversal can be performed on the graphical representation of the difference between the start state and the end state to generate the deployment sequence. As used herein, a graph traversal can include checking or updating each vertex in a graphical representation.

In some examples, the deployment sequence can be translated into a target deployment automation system (e.g., Ansible, CHEF generator, etc.). In some examples, the deployment sequence can be translated into a plurality of different deployment automation systems. For example, the deployment sequence can be in a format that allows the deployment sequence to be translated into a plurality of different deployment automation systems. In some examples, the translated deployment sequence can be executed to install, update, and/or load balance the computing system.

In some examples, the sequence to deploy the portion of the plurality of application components includes an order of operation to deploy each of the application components on a corresponding hardware component. As described herein, a first application component may utilize functions of a second application component and thus the second application component may be installed prior to the first application component. In some examples, the order of operation to deploy each of the application components can be an order of installing or updating each of the plurality of application components. Thus, in some examples, the memory resource 220 can include instructions that are executable by a processing resource to determine an order to deploy the portion of application components on each of the plurality of hardware components based on dependent functionality between the portion of application components.

In some examples, the memory resource 220 can be utilized in place of previous examples that utilized writing adhoc deployment sequences for each application and each automation system. In some examples, the memory resource 220 can utilize operations such as install, configure, start, or stop by utilizing a start state and an end state compared to more complex operations for application deployment.

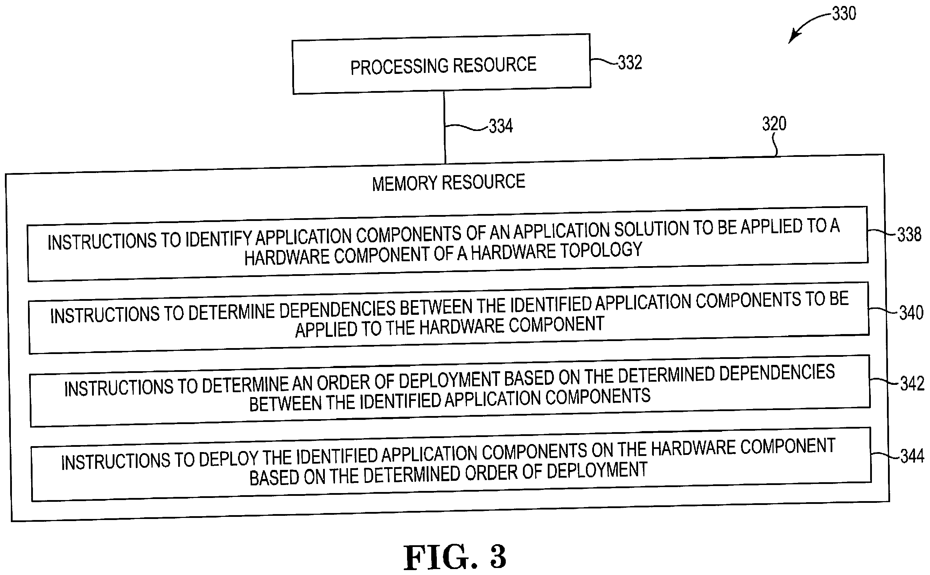

Figure 3 is a block diagram of an example of a system 330 for generating deployment sequences consistent with the disclosure. In some examples, the system 330 can include a memory resource 320 that can be utilized to store instructions 338, 340, 342, 344 that can be executed by a processing resource 332 to perform functions described herein. In some examples, the processing resource 332 can be coupled to the memory resource 320 via a connection 334. Connection 334 can be a physical or wireless communication connection that can be utilized to transfer data signals between the processing resource 332 and the memory resource 320.

A processing resource 332 may be a central processing unit (CPU), microprocessor, and/or other hardware device suitable for retrieval and execution of instructions stored in memory resource 320. In the particular example shown in Figure 3, processing resource 332 may receive, determine, and send instructions 338, 340, 342, 344. As an alternative or in addition to retrieving and executing instructions 338, 340, 342, 344, processing resource 332 may include an electronic circuit comprising a number of electronic components for performing the operations of the instructions 338, 340, 342, 344 in the memory resource 320. With respect to the executable instruction representations or boxes described and shown herein, it should be understood that part or all of the executable instructions 338, 340, 342, 344 and/or electronic circuits included within one box may be included in a different box shown in the figures or in a different box not shown.

Memory resource 320 may be any electronic, magnetic, optical, or other physical storage device that stores executable instructions 338, 340, 342, 344. In some examples, the memory resource 320 can be the same or similar as memory resource 220 as referenced in Figure 2.

In some examples, the memory resource 320 can include instructions 338 that are executable by the processing resource 332 to identify application components of an application solution to be applied to a hardware component of a hardware topology. As described herein, the application solution can be identified by comparing a start state of the computing system to an end state of the computing system. In some examples, the application solution can include a plurality of application components to be installed on a hardware component. In other examples, the application solution can include a plurality of application components that are updates for application components stored on hardware components.

In some examples, the memory resource 320 can include instructions 340 that are executable by the processing resource 332 to determine dependencies between the identified application components to be applied to the hardware component. As described herein, the dependencies between the plurality of application components can include relationships between the plurality of application components including relationships between the component specifications of the application components, relationships defined by the topology description between the application components, and/or relationships defined by configuration parameters between the application components.

In some examples, the dependencies can be determined to identify dependencies of the application components during deployment, during operation, and/or during load balancing of the application components. For example, the dependencies can be utilized to generate a deployment sequence for installing or updating the application components. In this example, the dependencies can also be utilized when the application components are being utilized by the computing system to identify malfunctions of the application components. For example, a first application component can affect a performance of a second application component. In this example, the dependencies can be utilized to determine that the second application component may not be functioning properly when the first application component is malfunctioning.

In some examples, the dependencies can be utilized by a load balancer (e.g., load balancer 112 as referenced in Figure 1, etc.). In some examples, the load balancer can be utilized when a network device or node is added to a computing system. For example, the load balancer can be utilized to automate a declaration of the added network device or node such that the load balancer begins to send traffic to the added network device or node of the computing system. In other examples, the load balancer can be utilized when a network device or node is removed from the computing system. For example, the load balancer can be updated when a network device or node is removed from the computing system. In this example, the load balancer can stop sending traffic to the removed network device or node.

In some examples, the memory resource 320 can include instructions 342 that are executable by the processing resource 332 to determine an order of deployment based on the determined dependencies between the identified application components. In some examples, the order of deployment can be an order of installation for two different application components. For example, a first application component can be deployed prior to a second application component when the second application component utilizes functions or resources of the first application component.

In other examples, the order of deployment can identify when to deploy a first plurality of application components compared to a second plurality of application components. For example, the first plurality of application components can be a first type of application component and the second plurality of application components can be a second type of application component that is different than the first type of application component. In this example, the order of deployment can identify which type of application component is to be deployed before or after other types of application components. In some examples, different types of application components can provide or perform different types of functions.

In some examples, the order of deployment is based on dependencies between the identified application components and additional application components to be deployed on additional hardware components of the hardware topology. In some examples, an application solution can include a plurality of stages that each include a portion of the plurality of application components that make up the application solution. In these examples, the order of deployment can be based on dependencies between a first portion of application components of a first stage and a second portion of application components of a second stage.

In some examples, the memory resource 320 can include instructions that are executable by the processing resource 332 to determine a deployment of application components of the application solution for each of a plurality of hardware components after each deployment of the order of deployment. In some examples, the memory resource 320 can include instructions that are executable by the processing resource 332 to confirm when a first application component of the application solution is deployed prior to initiating a deployment of a second application component when the second application component includes dependencies of the first application component.

In some examples, the deployment of application components can be confirmed prior to deploying a next application component. For example, when a first application component utilizes a function or depends from a second application component, the deployment of the second application can be confirmed prior to deploying the first application component. In this way, a malfunction of the first application component caused by not being able to interact with the second application component can be avoided.

In some examples, the memory resource 320 can include instructions 344 that are executable by the processing resource 332 to deploy the identified application components on the hardware component based on the determined order of deployment. In some examples, the order of deployment can be a deployment sequence that can be executed by an automation system as described herein. In some examples, deploying the identified application components can include translating the determined order of deployment into an automation technology language that can be executed by an automation system. In this way, the application components of the application solution can be installed, monitored, and/or load balanced by the order of deployment.

In some examples, the memory resource 320 can include instructions that are executable by the processing resource 332 to confirm when a first application component of the application solution is deployed prior to initiating a deployment of a second application component when the second application component includes dependencies of the first application component.

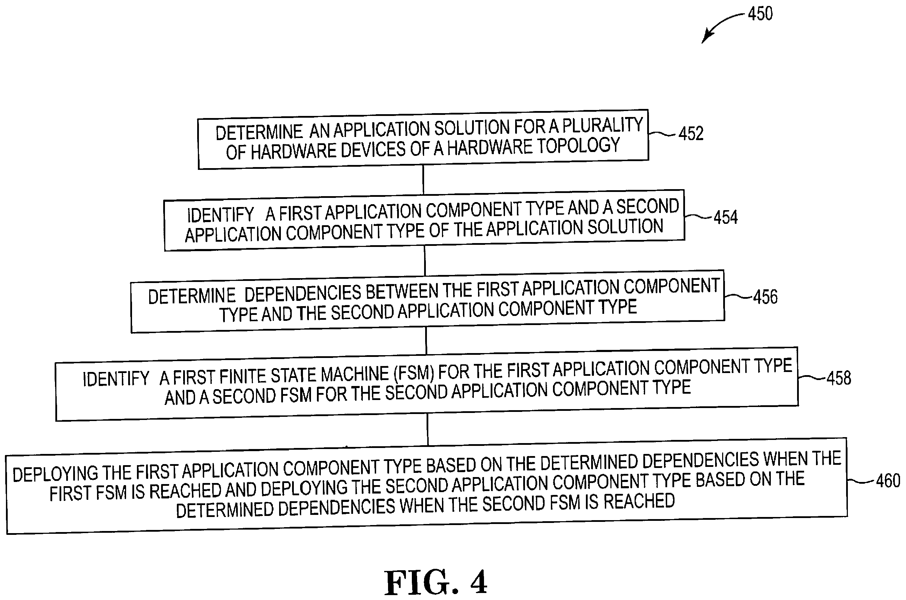

Figure 4 illustrates an example of a method 450 for generating deployment sequences consistent with the disclosure. In some examples, the method 450 can be executed or performed by a computing device or computing system. For example, the method 450 can be executed by a system such as system 330 as referenced in Figure 3.

At 452, the method 450 can include determining an application solution for a plurality of hardware devices of a hardware topology. As described herein, the application solution can be determined utilizing a start state and an end state of the computing system that includes the hardware topology. In some examples, the start state and the end state can be compared to determine differences. As described herein, the differences can be utilized to generate a graphical representation that can be utilized with a graphical traversal application to determine the application solution. As described herein, the graphical representation can be a visual graphical representation for visualizing the start state and the end state of a computing system and a non-visual graphical representation can be utilized to generate a deployment sequence.

In some examples, the application solution can be a complete deployment for a new computing system or network. In other examples, the application solution can be an update to existing application components installed on the hardware topology. By comparing the start state and the end state of the computing system, the differences can be utilized to identify the application components that are to be deployed to reach the end state. In this way, a deployment sequence can be generated based on the differences between the start state and the end state of the computing system.

At 454, the method 450 can include identifying a first application component type and a second application component type of the application solution. As described herein, first application component type can be an application component that performs a first function and the second component type can an application component that performs a second function that is different than the first function. In some examples, first application component type can have dependencies with the second application component type. Thus, in some examples, the first application component type can be deployed differently than the second application component type. For example, the first application component type can be deployed before the second application component type when the second application component type utilizes functions or resources associated with the first application component type.

As described herein, the first application component type can include a plurality of application components of a first type and the second application component type can include a plurality of application components of a second type that is different than the first type. Thus, in some examples, a plurality of application components of a first type can be deployed differently than a plurality of application components of a second type. In some examples, the method 450 can include confirming that a first application component type is deployed prior to deploying a second application component type. In some examples, confirming the first application component is deployed prior to deploying the second application component type can include confirming, for a particular hardware component, that the first application component type is deployed prior to deploying the second application component type.

In some examples, a first application component type and a second application component type can be deployed on a hardware component. In these examples, an upgrade can be scheduled to be deployed on the first application component type and the second application component type. In these examples, the first application component type can be stopped to deploy the upgrade to the first application component type. In these examples, the first application component type can be restarted when the upgrade has been deployed and/or prior to deploying the upgrade to the second application component type.

At 456, the method 450 can include determining dependencies between the first application component type and the second application component type. As described herein, the first application component type and the second application component type can have different dependencies. In some examples, determining the dependencies can include relationships between first application component type and the second application component type including relationships between the component specifications of the first application component type and the second application component type, relationships defined by the topology description between the first application component type and the second application component type, and/or relationships defined by configuration parameters between the first application component type and the second application component type.

In some examples, determining the dependencies can include determining when an operation executed by the second application component type triggers an operation to be executed by the first application component type. As described herein, the first application component can utilize functions of the second application component. In some examples, a function of the first application component can be triggered or executed by an operation executed by the second application component.

In some examples, determining the dependencies can include determining when deploying the first application component type also deploys the second application component type. In some examples, the first application component type can include instructions to deploy the second application component type. In these examples, the first application component type can be deployed on a virtual machine or computing device. In these examples, the first application component type can execute instructions to deploy the second application component type when the first application component type has completed deployment or reaches a particular state of deployment.

In some examples, identifying that the second application component type is being deployed by the first application component type can affect the deployment sequence. For example, the first application component type may not be deployed if the deployment of the second application component type negatively affects other application component types of the application solution. In addition, identifying the first application component type is deploying the second application component type can be utilized to avoid deployment duplication. As used herein, deployment duplication can include deploying the same application component or application component type unintentionally. For example, the first application component type can deploy the second application component type. In this example, the method 450 can avoid deploying the second application component type since it has already been deployed by the first application component type.

In some examples, determining the dependencies can include determining when the first application component type is an interface for the second application component type. As described herein, the interface can be an application component that provides functions to a different application component. For example, the second application component type can utilize the first application component type as an interface when the second application component type utilizes the first application component to communicate with a third application component type.

At 458, the method 450 can include identifying a first finite state machine (FSM) for the first application component type and a second FSM for the second application component type. As used herein, an FSM (e.g., first FSM, second FSM, etc.) can include a plurality of states that can change in response to an external input. For example, the FSM of an application component type can identify a particular state of the application component type based on inputs. In this example, the particular state can be based on other application components that have been deployed, hardware components that have been initiated, among other inputs that can affect the deployment of a particular application component type.

At 460, the method 450 can include deploying the first application component type based on the determined dependencies when the first FSM is reached and deploying the second application component type based on the determined dependencies when the second FSM is reached. In some examples, the first FSM can identify that the first application component type is deployed when the first FSM is reached. In this way, the method 450 can wait to deploy the second application component type until the first application component type is successfully deployed.

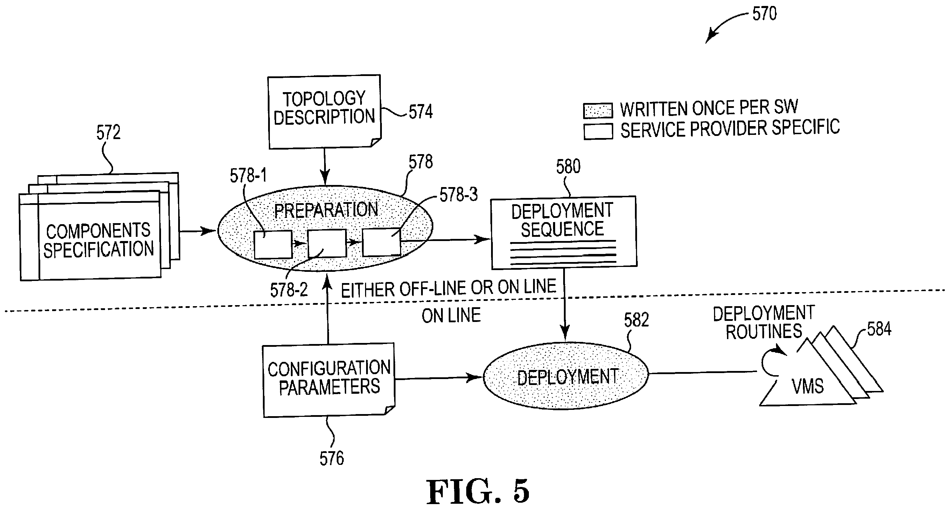

Figure 5 illustrates an example of a system 570 for generating deployment sequences consistent with the disclosure. In some examples, the system 570 can be utilized to generate a deployment sequence as described herein. In some examples, the system 570 can include a preparation engine 578 to generate a deployment sequence.

In some examples, the preparation engine 578 can receive component specifications 572, a topology description 574, and/or configuration parameters 576. As described herein, dependencies can be determined based on the received component specifications 572, a topology description 574, and/or configuration parameters 576. For example, dependencies between a plurality of application components can include dependencies between the component specifications 572 of the application components, dependencies defined by the topology description 574 between the application components, and/or dependencies defined by configuration parameters 576 between the application components.

In some examples, the preparation engine 578 can receive a start state and an end state of the computing system. In some examples, the preparation engine can compare the start state and the end state of the computing system to determine differences at 578-1. In some examples, the differences can be utilized to generate a graphical representation between the start state and the end state at 578-2. As described herein, a graphical traversal application can be utilized to a determine deployment sequence 580 to alter the computing system from the start state to the end state. In some examples, the deployment sequence 580 can be generated by an automation system that generates instructions at 578-3 for deploying the plurality of application components.

In some examples, the system 570 can include a deployment engine 582 to execute the deployment sequence 580. In some examples, the deployment engine 582 can be utilized to execute the deployment sequence 580 generated by the preparation engine 578. In some examples, the deployment engine can receive the configuration parameters 576 to deploy the plurality of application components based on the deployment sequence 580. In some examples, the deployment engine 582 can execute the deployment sequence 580 to provide deployment routines for a plurality of virtual machines (VM) 584.

In the foregoing detailed description of the disclosure, reference is made to the accompanying drawings that form a part hereof, and in which is shown by way of illustration how examples of the disclosure can be practiced. These examples are described in sufficient detail to enable those of ordinary skill in the art to practice the examples of this disclosure, and it is to be understood that other examples can be utilized and that process, electrical, and/or structural changes can be made without departing from the scope of the disclosure.

The figures herein follow a numbering convention in which the first digit corresponds to the drawing figure number and the remaining digits identify an element or component in the drawing. Similar elements or components between different figures can be identified by the use of similar digits. For example, 102 can reference element "02" in Figure 1, and a similar element can be referenced as 202 in Figure 2. Elements shown in the various figures herein can be added, exchanged, and/or eliminated so as to provide a plurality of additional examples of the disclosure. In addition, the proportion and the relative scale of the elements provided in the figures are intended to illustrate the examples of the disclosure and should not be taken in a limiting sense. As used herein, the designator "N", particularly with respect to reference numerals in the drawings, indicates that a plurality of the particular feature so designated can be included with examples of the disclosure. The designators can represent the same or different numbers of the particular features. Further, as used herein, "a plurality of" an element and/or feature can refer to more than one of such elements and/or features.

## Claims

1. A non-transitory machine-readable storage medium having stored thereon machine-readable instructions to cause a computer processor to:
determine dependencies between a plurality of application components of an application solution to be deployed on a plurality of hardware components of a computing system; and
generate a deployment sequence for the plurality of application components based on the determined dependencies between the plurality of application components, wherein the deployment sequence includes a portion of the plurality of applications to be deployed on each of the plurality of hardware components and a sequence to deploy the portion of the plurality of application components based on the determined dependencies.

2. The medium of claim 1, wherein the sequence to deploy the portion of the plurality of application components includes an order of operation to deploy each of the applications on a corresponding hardware component.

3. The medium of claim 1, wherein the determined dependencies indicate application components of the plurality of application components that are utilized by other application components of the plurality of application components.

4. The medium of claim 1, wherein the determined dependencies identify a first application component of the plurality of application components that does not function without a second application component deployed prior to the first application component.

5. The medium of claim 1, wherein the dependencies between the plurality of application components of an application solution are determined utilizing a system topology that includes a hardware architecture for the plurality of hardware components and a portion of application components to be deployed on each of the plurality of hardware components.

6. The medium of claim 5, comprising instructions executable by the processing resource to determine an order to deploy the portion of application components on each of the plurality of hardware components based on dependent functionality between the portion of application components.

7. A system comprising:
a processing resource; and
a memory resource storing machine readable instructions to cause the processing resource to:
identify application components of an application solution to be applied to a hardware component of a hardware topology;
determine dependencies between the identified application components to be applied to the hardware component;
determine an order of deployment based on the determined dependencies between the identified application components; and
deploy the identified application components on the hardware component based on the determined order of deployment.

8. The system of claim 7, wherein the instructions to deploy the identified application components includes translating the determined order of deployment into an automation technology language.

9. The system of claim 7, comprising instructions executable by the processing resource to determine a deployment of application components of the application solution for each of a plurality of hardware components after each deployment of the order of deployment.

10. The system of claim 7, comprising instructions executable by the processing resource to confirm when a first application component of the application solution is deployed prior to initiating a deployment of a second application component when the second application component includes dependencies of the first application component.

11. A method comprising:
determining an application solution for a plurality of hardware devices of a hardware topology;
identifying a first application component type and a second application component type of the application solution;
determining dependencies between the first application component type and the second application component type;
identifying a first finite state machine (FSM) for the first application component type and a second FSM for the second application component type; and
deploying the first application component type based on the determined dependencies when the first FSM is reached and deploying the second application component type based on the determined dependencies when the second FSM is reached.

12. The method of claim 11, wherein determining the dependencies includes determining when an operation executed by the second application component type triggers an operation to be executed by the first application component type.

13. The method of claim 11, wherein determining the dependencies includes determining when deploying the first application component type also deploys the second application component type.

14. The method of claim 11, wherein determining the dependencies includes determining when the first application component type is an interface for the second application component type.

15. The method of claim 11, wherein the first application component type includes a plurality of application components of a first type and the second application component type includes a plurality of application components of a second type that is different than the first type.
